# FASCICULE DE BREVET EUROPEEN

(11) **EP 4 676 796 B1**
(45) Date de publication et mention de la délivrance du brevet: **07.10.2026**
(21) Numéro de dépôt: 24707603.7
(22) Date de dépôt: 06.02.2024
(51) Int. Cl.: B60W 30/18, B60W 30/16, B60W 50/14, B60W 50/10, B60W 50/08, B60W 30/14

(54) **CONTRÔLE D'UNE FONCTION D'ASSISTANCE À LA CONDUITE LONGITUDINALE**
STEUERUNG EINER LÄNGSFAHRASSISTENZFUNKTION
CONTROL OF A LONGITUDINAL DRIVING ASSISTANCE FUNCTION

(30) Priorité: 07.03.2023 FR 2302101
(43) Date de publication de la demande: 14.01.2026
(73) Titulaire: Stellantis Auto SAS, 78300 Poissy (FR)
(72) Inventeur: DUSI, Jacques, 77220 GRETZ ARMAINVILLIERS (FR)
(74) Mandataire: ESIP
(86) Numéro de dépôt international: PCT/FR2024/050156
(87) Numéro de publication internationale: WO 2024/184596

(56) Documents cités:
- DE-A1- 102020 004 196
- DE-A1- 102020 115 114
- US-A1- 2016 082 971
- US-A1- 2020 001 875

## Description

La présente invention revendique la priorité de la demande française 2302101 déposée le 07.03.2023. La présente invention appartient au domaine de l'assistance à la conduite d'un véhicule, notamment à l'assistance au guidage longitudinal.

Elle est particulièrement avantageuse dans le contexte de véhicules hébergeant une fonction d'assistance à la conduite permettant d'assister ou de réaliser de manière autonome le guidage longitudinal du véhicule, comprenant l'adaptation de la vitesse longitudinale du véhicule, notamment lors de la détection d'approche d'une jonction ou intersection. Des exemples de tels systèmes sont divulgués dans DE102020115114 A1, US 2020/001875 A1, DE102020004196 A1 et US 2016/082971 A1.

On entend par « véhicule » tout type de véhicule tel qu'un véhicule automobile, un cyclomoteur, une motocyclette, un robot de stockage dans un entrepôt, etc.

On entend par « conduite autonome » d'un « véhicule autonome » toute méthode apte à assister la conduite du véhicule. La méthode peut ainsi consister à diriger partiellement ou totalement le véhicule ou à apporter tout type d'aide à une personne physique conduisant le véhicule. Ainsi, « conduite autonome » couvre l'ensemble des niveaux 1 à 5 du barème de l'OICA, pour Organisation International des Constructeurs Automobiles.

L'assistance à la conduite peut intervenir à différents niveaux d'autonomie : de la conduite autonome sans intervention du conducteur, à l'assistance à la conduite manuelle.

Des systèmes d'aide à la conduite, de type ADAS par exemple, pour *Advanced Driver-Assistance Systems* en anglais, permettent d'assister le conducteur du véhicule voire de contrôler intégralement certains paramètres du pilotage du véhicule, tels que la trajectoire longitudinale, la vitesse notamment, et/ou la trajectoire latérale (maintien dans la voie, gestion des virages, ou changement de voie notamment).

Ces systèmes permettent d'améliorer le confort de conduite ainsi que la sécurité, en tirant parti de données issues de capteurs du véhicule, telles que des données de radar ou lidar, de caméras et/ou d'informations issues de cartographies pré-établies, utilisées via des dispositifs de géolocalisation.

Des fonctions sont notamment dédiées à l'adaptation de la vitesse longitudinale du véhicule, en fonction de l'environnement du véhicule, notamment en fonction des autres véhicules, d'éléments physiques de l'infrastructure routières et de contraintes règlementaires/légales.

Une telle fonction est appelée pACC pour « *predictive Adaptative Cruise Control »,* en anglais. La fonction pACC améliore la fonction ACC, pour *« Adaptative Cruise Control »,* qui adapte la vitesse du véhicule en fonction d'une valeur de consigne fournie par le conducteur.

La fonction pACC permet notamment d'adapter la vitesse du véhicule en fonction des éléments suivants, en plus des autres véhicules circulant sur la voie : dos-d'âne, ronds-points, feux tricolores, stops, cédez-le-passage, virages mais également les intersections.

Il est connu que la fonction pACC puisse adapter la vitesse du véhicule à l'approche d'une intersection, de la manière suivante :
- détection de l'approche de l'intersection par le déclenchement d'un clignotant par le conducteur ;
- décision par la fonction pACC de diminuer la vitesse longitudinale du véhicule afin de passer en tout confort l'intersection, une telle décision étant prise en amont de l'intersection et pouvant être indiquée au conducteur sur une interface homme machine du véhicule.

Il est toutefois préférable que le conducteur puisse refuser la fonction pACC lorsqu'elle est indiquée comme gérant l'intersection à venir, sur détection de l'approche de l'intersection, notamment pour les raisons suivantes :
- erreur du conducteur lors du déclenchement du clignotant, le conducteur ne voulant pas prendre l'intersection ;
- erreur de gestion de la vitesse par la fonction pACC, par exemple qui est trop lente pour l'intersection ;
- erreur de la fonction pACC qui propose une intersection qui n'est en fait pas présente ou interdite ;
- erreur de la fonction pACC qui a mal interprété le déclenchement du clignotant. En effet, le clignotant n'est pas nécessairement déclenché pour le franchissement d'une intersection, mais peut être utilisé pour doubler un autre véhicule ou pour changer de voie de circulation.

Des moyens pour le conducteur sont ainsi prévus pour refuser la gestion d'une intersection par la fonction pACC :
- freiner, ce qui désactive la fonction pACC ;
- accélérer, ce qui suspend la fonction pACC ;
- retirer son clignotant, ce qui annule la gestion de l'intersection par la fonction pACC.

La solution consistant à retirer son clignotant est avantageuse en ce qu'elle ne nécessite pas de changer la vitesse longitudinale du véhicule juste pour refuser l'intersection proposée par la fonction pACC et qu'elle maintient active la fonction pACC qui prend en considération les éléments d'infrastructure routière autres que l'intersection. Qui plus est, il peut être souhaitable de garder la fonction pACC activée, tout en refusant la proposition de gestion de l'intersection, c'est-à-dire que le conducteur souhaite que la fonction pACC soit active mais sans prise en compte de l'intersection.

En outre, dans le cas où le conducteur souhaite refuser la gestion de l'intersection par la fonction pACC, il est dangereux de retirer son clignotant, car les autres conducteurs peuvent penser que le véhicule ne va pas prendre l'intersection, ce qui peut poser de graves problèmes de sécurité.

Si le conducteur retire son clignotant, afin de refuser la gestion de l'intersection de la fonction pACC, mais décide ensuite de le remettre afin d'indiquer aux autres usagers de la route que le véhicule va prendre l'intersection, la fonction pACC peut proposer à nouveau la prise en charge de l'intersection.

Le conducteur n'a alors pas la possibilité de simplement refuser la gestion de l'intersection par la fonction pACC à l'approche d'une intersection occasionnant un changement de direction qu'il est préférable d'indiquer aux autres usagers de la route, pour éviter des problèmes de sécurité.

La présente invention vient améliorer la situation.

Un premier aspect de l'invention concerne un procédé de contrôle d'une fonction d'assistance à la conduite longitudinale d'un véhicule, le procédé comprenant les étapes suivantes :
- sur détection d'une approche d'une intersection par le véhicule et d'une activation d'un clignotant du véhicule, indication au conducteur d'une gestion de l'intersection par la fonction d'assistance à la conduite longitudinale ;
- sur détection d'une extinction du clignotant, annulation de la gestion de l'intersection par la fonction d'assistance à la conduite longitudinale ;
- suite à la détection d'une nouvelle activation du clignotant du véhicule, alors que l'intersection n'est pas franchie, inhibition de la gestion de l'intersection par la fonction d'assistance à la conduite longitudinale jusqu'à une détection de franchissement de ladite intersection.

Ainsi, il est rendu possible de refuser la gestion de l'intersection par la fonction d'assistance à la conduite longitudinale, tout en activant le clignotant, ce qui améliore le confort de conduite et la sécurité comparativement aux techniques de l'art antérieur. A noter que le refus de la gestion de l'intersection par la fonction d'assistance à la conduite longitudinale n'équivaut pas à une désactivation de la fonction d'assistance à la conduite longitudinale : une telle fonction peut être poursuivie en tenant compte des autres véhicules, notamment d'un autre véhicule circulant devant le véhicule, et des éléments d'infrastructure routière autres que l'intersection.

Selon des modes de réalisation, l'indication de gestion de l'intersection par la fonction d'assistance à la conduite longitudinale peut comprendre la transmission à une interface homme machine du véhicule d'au moins une information de gestion de l'intersection par la fonction d'assistance à la conduite longitudinale, pour affichage de ladite au moins une information sur l'interface homme machine.

Ainsi, le contrôle de la fonction d'assistance à la conduite longitudinale est facilité pour le conducteur.

En complément, l'au moins une information affichée peut comprendre un symbole d'intersection, une distance entre le véhicule et l'intersection, une vitesse courante et/ou une vitesse cible du véhicule après ralentissement par la fonction d'assistance à la conduite longitudinale.

Ainsi, le contrôle de la vitesse du véhicule est facilité pour le conducteur, qui peut prendre la décision de maintenir ou non la gestion de l'intersection par la fonction d'assistance à la conduite longitudinale sur la base d'informations pertinentes. En particulier, le conducteur peut refuser la gestion de l'intersection par la fonction d'assistance à la conduite, lorsqu'elle correspond à une vitesse cible trop faible pour le conducteur.

Selon des modes de réalisation, la fonction d'assistance à la conduite longitudinale peut être inhibée si une durée entre l'annulation du clignotant et la nouvelle activation du clignotant est inférieure à une durée seuil.

Il est ainsi permis au conducteur d'inhiber la prise en compte de l'intersection dans la fonction d'assistance à la conduite longitudinale, en éteignant et en réactivant le clignotant, dans un temps court, inférieur à la durée seuil. Un tel critère additionnel permet de s'assurer de l'intentionnalité de la manœuvre d'extinction/réactivation du clignotant, tout en diminuant la durée entre l'extinction et la réactivation du clignotant pour ne pas perturber les autres usagers de la route.

En complément, la durée seuil peut être une durée prédéfinie d'affichage de l'information de gestion sur l'interface homme machine après annulation de la gestion de l'intersection par la fonction d'assistance à la conduite longitudinale.

Ainsi, le contrôle de la fonction d'assistance à la conduite longitudinale par le conducteur est facilité.

Selon des modes de réalisation, la fonction d'assistance à la conduite longitudinale est mise en œuvre, suite à l'inhibition de la gestion de l'intersection, en fonction :
- d'une vitesse et d'une position d'un autre véhicule en avant du véhicule ;
- d'une consigne indiquant une vitesse de croisière ; et/ou
- d'au moins un élément d'infrastructure routière autre que l'intersection.

L'invention permet ainsi une continuité de service de la fonction d'assistance à la conduite longitudinale, qui ignore uniquement la gestion de l'intersection, tout en tenant compte des autres éléments d'infrastructures, véhicules ou de la consigne de vitesse de croisière indiquée par le conducteur.

Selon des modes de réalisation, l'intersection détectée peut être une intersection dans laquelle une route courante sur laquelle circule le véhicule :
- croise une autre route à droite ou à gauche de la route courante ;
- se sépare en deux routes ; ou
- rejoint une autre route.

Ainsi, le procédé selon l'invention permet la détection de divers types d'intersection. En outre, chaque type d'intersection peut correspondre à une vitesse cible après ralentissement donnée que la fonction d'assistance à la conduite longitudinale applique pour ralentir le véhicule lors de la gestion de l'intersection. Le conducteur peut ainsi inhiber la gestion de l'intersection par la fonction d'assistance à la conduite en fonction du type d'intersection.

Un deuxième aspect de l'invention concerne un programme informatique comportant des instructions pour la mise en œuvre du procédé selon le premier aspect de l'invention, lorsque ces instructions sont exécutées par un processeur.

Un troisième aspect de l'invention concerne un module de contrôle apte à contrôler au moins une fonction d'assistance à la conduite longitudinale d'un véhicule mise en œuvre par un module d'assistance à la conduite, le module de contrôle comprenant un processeur configuré pour :
- sur détection d'une approche d'une intersection par le véhicule, et sur détection d'activation d'un clignotant du véhicule, indiquer au conducteur une gestion de l'intersection par la fonction d'assistance à la conduite longitudinale ;
- sur détection d'une extinction du clignotant, annuler la gestion de l'intersection par la fonction d'assistance à la conduite longitudinale ;
- suite à la détection d'une nouvelle activation du clignotant du véhicule alors que l'intersection n'est pas franchie, inhiber la gestion de l'intersection par la fonction d'assistance à la conduite longitudinale jusqu'à une détection de franchissement de ladite intersection.

Un quatrième aspect de l'invention concerne un véhicule comprenant un module d'assistance à la conduite selon le troisième aspect de l'invention.

D'autres caractéristiques et avantages de l'invention apparaîtront à l'examen de la description détaillée ci-après, et des dessins annexés sur lesquels :
[Fig 1] illustre un véhicule selon un mode de réalisation de l'invention;
[Fig 2] est un diagramme illustrant les étapes d'un procédé selon des modes de réalisation de l'invention ;
[Fig 3a] représente une situation de conduite dans laquelle le véhicule selon l'invention approche une intersection d'un premier type ;
[Fig 3b] représente une situation de conduite dans laquelle le véhicule selon l'invention approche une intersection d'un deuxième type ;
[Fig 3c] représente une situation de conduite dans laquelle le véhicule selon l'invention approche une intersection d'un troisième type ;
[Fig 4] illustre un module de contrôle selon des modes de réalisation de l'invention.

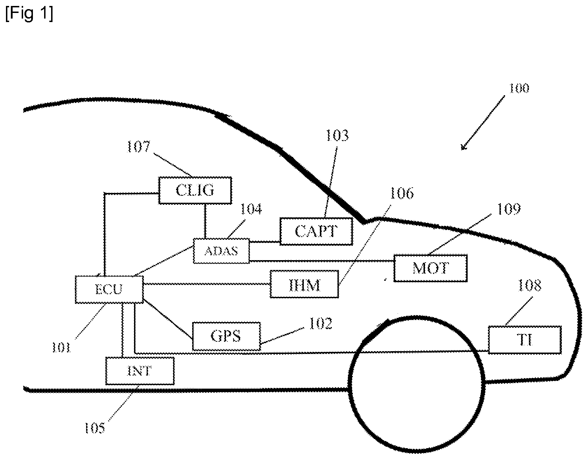

La figure 1 présente un véhicule 100 selon un mode de réalisation de l'invention.

Le véhicule 100 comprend un dispositif de contrôle centralisé 101. Le dispositif de contrôle 101 peut être un élément de type ECU, pour « *Electronic Control Unit* » en anglais, en charge du contrôle centralisé du véhicule 100. Le dispositif de contrôle centralisé 101 peut comprendre plusieurs modules en charge du contrôle ou de la communication de différents éléments du véhicule automobile.

Le véhicule 100 peut comprendre un module d'assistance à la conduite 104, aussi appelé ADAS, pour « *Advanced Driver Assistance Systems* » en anglais, apte à réaliser au moins une fonction d'aide à la conduite, sur la base notamment de données issues d'un ensemble 103 comprenant au moins un capteur.

Aucune restriction n'est attachée au véhicule 100, en particulier au niveau d'autonomie de conduite permis par le véhicule. Le module ADAS 104 peut aider le conducteur dans le pilotage du véhicule. En particulier, selon l'invention, le module ADAS 104 implémente au moins une fonction d'adaptation de la vitesse longitudinale, qui permet à la fois d'adapter la vitesse longitudinale du véhicule 100 aux autres véhicules circulant sur la même route, notamment sur la même voie et notamment l'autre véhicule précédant le véhicule circulant sur la même voie, mais également en fonction des éléments d'infrastructure routière imposant des contraintes légales et/ou physiques pour la vitesse longitudinale du véhicule. Une telle fonction est appelée pACC pour « *predictive Adaptative Cruise Control* »*,* en anglais. La fonction pACC améliore la fonction ACC, pour « Adaptative Cruise Control », qui adapte la vitesse du véhicule en fonction d'une valeur de consigne fournie par le conducteur.

La fonction pACC permet notamment d'adapter la vitesse du véhicule en fonction des éléments d'infrastructure suivants, en plus des autres véhicules circulant sur la voie : dos-d'âne, ronds-points, feux tricolores, stops, cédez-le-passage, virages mais également les intersections.

A cet effet, le module ADAS 104 peut envoyer des consignes de régulation de la vitesse à l'ECU 101, qui est apte à contrôler un moteur décrit dans ce qui suit. En variante, le module ADAS communique les consignes de régulation de vitesse directement au moteur.

En outre, de manière complémentaire et optionnelle, le module ADAS 104 peut implémenter des fonctions pour la détermination ou le maintien de la vitesse ou de l'accélération, ou peut assurer le pilotage autonome du véhicule, sans la contribution du conducteur. L'assistance à la conduite recouvre ainsi également le pilotage automatique du véhicule.

Le véhicule 100 selon l'invention peut comprendre en outre un module de localisation du véhicule 102, par satellite notamment, de type GPS, pour « *Global Positioning System* » en anglais, ou équivalent (Glonass, Bediou, Galliléo...). Le module de localisation 102 est apte à déterminer des données de géolocalisation identifiant une position courante du véhicule automobile 100.

Le système peut comprendre en outre un ensemble 103 de capteurs, apte à acquérir des données de capteur, notamment de manière dynamique lorsque le véhicule est en mouvement. Les données de capteur sont des données descriptives de l'état du véhicule et/ou de la situation de conduite et peuvent avantageusement être exploitées pour la mise en œuvre de fonctions d'assistance à la conduite du module ADAS 104.

En particulier, selon l'invention, l'ensemble 103 peut comprendre au moins un capteur apte à acquérir des données utiles pour la mise en œuvre de la fonction pACC décrite précédemment. Par exemple, les données de capteurs utilisées par la fonction pACC peuvent être des données de lidar, de radar ou de caméra du véhicule. De tels capteurs permettent d'identifier des éléments d'infrastructure routière tels que des ronds-points, feux tricolores, stops, cédez-le-passage, virages mais également les intersections, imposant des contraintes physiques et/ou réglementaires pour la conduite du véhicule. Les capteurs permettent également d'identifier d'autres véhicules circulant sur la route, notamment sur la même voie et en avant du véhicule, et de déterminer leurs positions et leurs vitesses.

Le véhicule 100 peut comprendre en outre une interface de télécommunications 105 apte à accéder à un réseau cellulaire, tel qu'un réseau de données par exemple, 3G, 4G, 5G ou toute autre génération. L'interface de télécommunications 105 peut notamment permettre à l'ECU 101 et au module ADAS 104 d'accéder à des informations stockées sur un serveur distant, accessibles via un réseau étendu de type internet. Par exemple, l'interface de télécommunications 105 peut permettre d'accéder à des données cartographiques stockées sur un serveur distant.

Le véhicule 100 peut comprendre en outre une mémoire de stockage non représentée, qui peut notamment stocker des données cartographiques. En variante, les données cartographiques peuvent être stockées dans l'un des modules précédemment décrits, notamment dans une mémoire de l'ECU 101.

Ainsi, des données cartographiques peuvent être stockées localement ou être obtenues depuis un serveur distant.

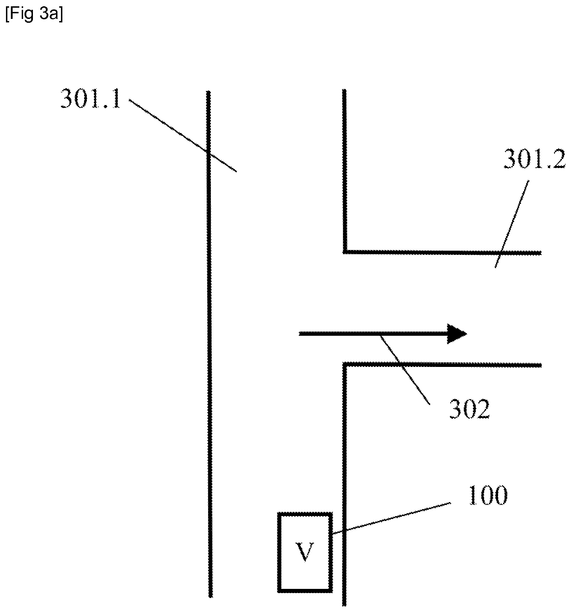

La superposition de la localisation du véhicule 100 obtenue par le module de localisation 102, avec les données cartographiques stockées localement et/ou obtenues à distance, peut également permettre de déterminer des éléments de la scène en avant du véhicule 100. En particulier, selon l'invention l'ECU 101 ou le module ADAS 104, par comparaison de ces données est apte à détecter l'approche d'une intersection, pouvant correspondre à l'une des situations de conduite illustrées et décrites ultérieurement en référence aux figures 3a à 3c.

L'approche d'une intersection indique que le véhicule se situe à moins de D mètres de l'intersection, la valeur D pouvant être prédéfinie, de préférence de l'ordre de plusieurs centaines de mètres.

L'approche de l'intersection peut ainsi être détectée :
- à partir de données de capteurs de l'ensemble 103 ;
- à partir d'une superposition de données cartographiques et de la localisation du véhicule 100 ; ou
- à partir des données de capteur de l'ensemble 103 et de la superposition de données cartographiques et de la localisation du véhicule 100.

Le véhicule 100 comprend en outre une interface homme machine 106, avec laquelle le module ADAS 104 selon l'invention est apte à communiquer, soit directement, soit via l'ECU 101.

Aucune restriction n'est attachée à l'IHM 106, qui comprend tout élément permettant soit de recevoir une commande de l'utilisateur, que cette commande soit relative au pilotage du véhicule ou au contrôle d'équipements intérieurs, soit de transmettre des informations à l'utilisateur. L'IHM peut notamment être apte à recevoir une consigne de vitesse de croisière indiquée par le conducteur, et la fonction pACC est apte à maintenir la vitesse du véhicule proche de la vitesse de consigne, sauf en cas de détection d'un élément d'infrastructure ou d'un autre véhicule nécessitant une adaptation de la vitesse longitudinale du véhicule. A cet effet, l'IHM peut comprendre n'importe lequel des éléments suivants, ou toute combinaison parmi les éléments suivants : un écran, tel qu'un écran tactile, un ensemble d'un ou de plusieurs boutons, un haut-parleur, un microphone, un tableau de bord apte à afficher un ou plusieurs pictogrammes lumineux de formes prédéfinies, un système de vibration du volant, un système de pilotage manuel du véhicule comprenant un volant, une pédale d'accélération, etc.

De manière préférentielle, l'IHM 103 est capable de transmettre des données visuelles et/ou sonore au conducteur du véhicule, notamment des informations reçues depuis le module ADAS 104, soit directement, soit via l'ECU 101.

Le véhicule comprend également une interface d'activation de clignotant 107 apte à recevoir une commande d'activation de clignotant, de manière à transmettre une telle commande à l'ECU 101 et qui est ainsi apte à contrôler des modules lumineux clignotants 108 parmi deux modules lumineux clignotants 108 respectivement montés à droite et à gauche du véhicule, de préférence, à l'avant et à l'arrière du véhicule. A l'avant, les modules lumineux clignotants 108 peuvent être intégrés dans des dispositifs d'éclairage du véhicule, tandis qu'à l'arrière les modules lumineux clignotants peuvent être intégrés dans des dispositifs de signalisation du véhicule.

Une telle interface d'activation de clignotant 107 peut être apte à recevoir une commande d'activation de clignotant droit et une commande d'activation de clignotant gauche. Il peut par exemple s'agir d'une manette rotative, actionnable par l'utilisateur dans un sens ou dans un autre sens afin de générer une commande d'activation de clignotant droit ou gauche.

Le véhicule 100 comprend en outre un moteur 109 apte à être contrôlé par l'ECU 101 ou par le module ADAS 104, comme précédemment décrit. De préférence, l'ECU 101 peut commander le moteur 109 en fonction de consignes issues d'un pilotage manuel du véhicule par le conducteur et/ou de consignes issues d'une ou de plusieurs fonctions du module ADAS 104, notamment issues de la fonction pACC précédemment discutée.

Aucune restriction n'est attachée au moteur 109, qui peut être thermique, hybride ou électrique.

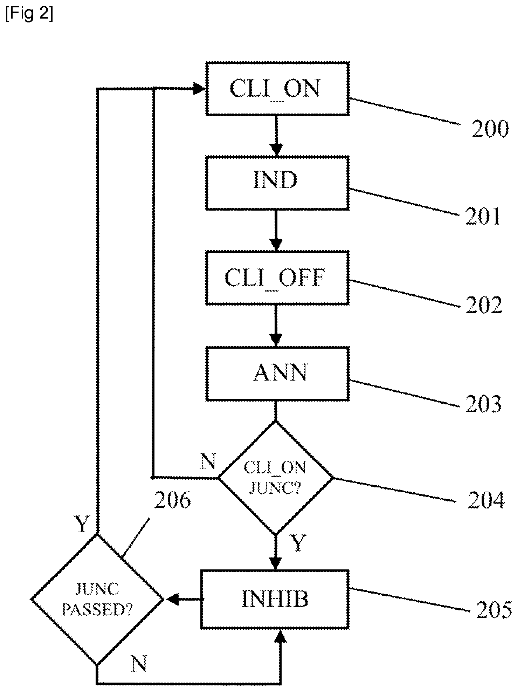

La figure 2 est un diagramme illustrant les étapes d'un procédé selon des modes de réalisation de l'invention.

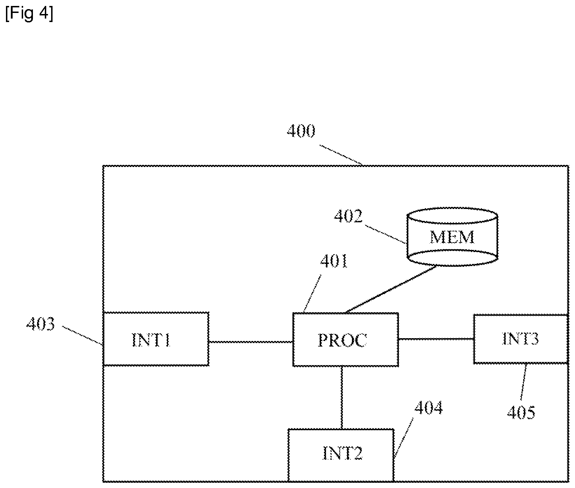

Le procédé est un procédé de contrôle de la fonction d'assistance à la conduite longitudinale du véhicule 100, notamment de la fonction pACC. Le procédé peut être mis en œuvre dans le module de contrôle décrit en référence à la figure 4, qui peut être l'ECU 101 ou qui peut être intégré dans le module ADAS 104. Dans ce qui suit, il est considéré à titre illustratif uniquement que le module de contrôle mettant en œuvre le procédé est l'ECU 101. Toutefois, la description qui suit du procédé s'applique également à un module de contrôle intégré dans le module ADAS 104. Initialement, c'est-à-dire avant l'étape 200, la fonction pACC peut être active. En particulier, la vitesse prise en compte par la fonction pACC pour réguler la vitesse du véhicule peut être une consigne de vitesse de croisière indiquée par le conducteur.

A une étape 200, l'ECU 101 détecte que le véhicule 100 approche d'une intersection et détecte que le conducteur a activé le clignotant d'un côté du véhicule via l'interface d'activation du clignotant. Comme décrit précédemment, le fait que le véhicule 100 s'approche d'une intersection peut être détecté à partir de données de capteur et/ou à partir d'une superposition de données cartographiques et de données de géolocalisation du véhicule 100. L'approche d'une intersection peut correspondre à différentes situations de conduite en fonction du type d'intersection, dont trois types seront décrits dans ce qui suit en référence aux figures 3a à 3c.

L'étape 200 correspond donc à une double détection, les détections pouvant être mises en œuvre séquentiellement, selon la situation de conduite. Par exemple, le module de contrôle 101 peut d'abord détecter l'approche de l'intersection puis l'activation du clignotant, ou bien peut d'abord détecter l'activation du clignotant puis l'approche de l'intersection.

A une étape 201 qui est conditionnée par la double détection de l'étape 200, l'ECU 101 indique au conducteur que la fonction d'assistance à la conduite longitudinale assure la gestion de l'intersection. Une telle indication est ainsi fournie en amont de l'intersection, sur détection de l'approche et si le clignotant est activé alors que le véhicule est à une distance supérieure à une distance minimale de l'intersection. Si le clignotant est déclenché alors que la distance à l'intersection est trop faible, la fonction d'assistance à la conduite longitudinale n'a pas le temps d'assurer la gestion de l'intersection.

Autrement dit, l'étape 201 est mise en œuvre lorsque la distance du véhicule à l'intersection est située dans un intervalle donné de distances. La gestion de l'intersection comprend la gestion de la vitesse du véhicule avant l'intersection et pendant le changement de voie de l'intersection. Une telle gestion comprend notamment la décélération du véhicule d'une vitesse courante, pouvant correspondre à la vitesse de croisière de la consigne, à une vitesse cible inférieure à la vitesse courante. La vitesse cible peut dépendre du type d'intersection détecté ou peut être identique pour tout type d'intersection. La vitesse cible peut par exemple être égale à 20 kilomètres par heure, km/h.

L'indication au conducteur peut comprendre l'envoi d'au moins une information de gestion de l'intersection par la fonction d'assistance à la conduite longitudinale, à l'IHM 106, pour affichage de ladite au moins une information sur l'IHM. L'au moins une information de gestion de l'intersection par l'IHM peut notamment comprendre :
- une information binaire indiquant que l'intersection est en approche. Pour représenter cette information, l'IHM 106 peut afficher un symbole d'intersection ;
- une distance entre le véhicule et l'intersection. L'IHM 106 peut afficher une telle distance, avec une mise à jour régulière en fonction de la progression du véhicule 100 ;
- une vitesse courante ou une vitesse maximale autorisée. L'IHM 106 peut afficher une telle vitesse, avec une mise à jour régulière de la vitesse courante en fonction de l'évolution de la vitesse du véhicule 100 ; et/ou
- la vitesse cible du véhicule après ralentissement par la fonction d'assistance à la conduite longitudinale. L'IHM 106 peut afficher une telle vitesse cible.

L'exemple d'une IHM qui affiche visuellement les informations précitées a été donnée. En variante, au moins l'une des informations précitées peut être indiquée au conducteur de manière sonore et non visuelle, via un haut parleur de l'IHM 106.

A une étape 202, l'ECU 101 détecte que le conducteur annule ou éteint le clignotant, par manipulation de l'interface d'activation du clignotant 107 notamment. Une telle manipulation peut notamment consister à replacer l'interface d'activation du clignotant 107 dans sa position par défaut.

A une étape 203, suite à la détection de l'extinction du clignotant, une telle extinction est interprétée par l'ECU comme une volonté du conducteur de refuser la gestion de l'intersection par la fonction pACC. L'ECU 101 annule ainsi la gestion de l'intersection par la fonction pACC. Une telle annulation peut comprendre l'envoi d'un signal d'annulation de la gestion de l'intersection au module ADAS 104, afin d'indiquer que l'intersection doit être ignorée jusqu'à franchissement de l'intersection ou jusqu'à réception d'un signal indiquant le contraire. Autrement dit, la fonction pACC doit se poursuivre en fonction d'autres paramètres que l'intersection, notamment en fonction de la vitesse de croisière de la consigne, d'autres véhicules sur la route, et/ou d'au moins un élément d'infrastructure routière autre que l'intersection.

Toutefois, comme indiqué en partie introductive, si le conducteur souhaite effectivement changer de direction lors de l'intersection, il doit pouvoir signaler ce changement de direction aux autres usagers de la route.

A cet effet, l'ECU 101 détecte une nouvelle activation du clignotant à une étape 204, via l'interface d'activation du clignotant 107.

Durant l'étape 204, l'ECU 101 vérifie que la nouvelle activation du clignotant est reçue avant le franchissement de l'intersection. Une telle vérification peut être basée sur les données de capteurs, et/ou sur la superposition des données cartographiques et des données de géolocalisation du véhicule 100.

Si tel n'est pas le cas, c'est-à-dire si la nouvelle activation du clignotant est reçue après le franchissement de l'intersection, le procédé retourne à l'étape 200. En particulier, l'ECU 101 peut vérifier si le véhicule est en approche d'une nouvelle intersection, et les étapes précédentes peuvent être répétées.

Si la nouvelle activation du clignotant est reçue avant le franchissement de l'intersection, alors l'ECU 101 interprète la nouvelle activation comme la volonté du conducteur d'effectivement changer de direction lors de l'intersection tout en inhibant la prise en compte de l'intersection dans la fonction pACC.

A cet effet, l'ECU 101 inhibe la gestion de l'intersection par la fonction pACC à l'étape 205 suite à la nouvelle activation du clignotant, jusqu'au franchissement de l'intersection. Dans l'art antérieur, une telle nouvelle activation conduisait à la gestion de l'intersection par la fonction pACC, et ce, malgré le refus précédant de l'étape 202. L'inhibition de la gestion de l'intersection par la fonction pACC jusqu'au franchissement de l'intersection peut comprendre l'envoi d'un signal d'inhibition au module ADAS 104 afin d'empêcher la prise en compte de l'intersection. Autrement dit, suite à l'inhibition de la gestion de l'intersection, la fonction pACC se poursuit en fonction d'autres paramètres que l'intersection, notamment en fonction de la vitesse de croisière de la consigne, d'autres véhicules sur la route, et/ou d'au moins un élément d'infrastructure routière autre que l'intersection..

Ainsi, il est permis au conducteur d'indiquer le changement de direction lors de l'intersection aux autres usagers de la route.

Lors de l'étape 204, l'ECU 101 peut vérifier d'autres critères que le non-franchissement de l'intersection pour provoquer le passage à l'étape 205.

Par exemple, une durée entre la nouvelle activation du clignotant de l'étape 204 et l'extinction du clignotant de l'étape 202 peut être déterminée ou évaluée, et la durée déterminée peut être comparée avec une valeur seuil. Si la durée déterminée est inférieure à la durée seuil, alors l'ECU 101 met en œuvre l'étape 205. Sinon, si la durée déterminée est supérieure à la valeur seuil, alors le procédé retourne à l'étape 200.

Il est ainsi permis au conducteur d'indiquer un changement de direction lors de l'intersection, en désactivant et en réactivant le clignotant, dans un temps court, inférieur à la durée seuil. Un tel critère additionnel permet à l'ECU 101 de s'assurer de l'intentionnalité de la manœuvre d'extinction/réactivation du clignotant, tout en diminuant la durée entre l'extinction et la réactivation du clignotant pour ne pas perturber les autres usagers de la route. Par exemple, la durée seuil peut être une durée prédéfinie de maintien de l'information affichée sur l'interface homme machine 106 après l'annulation de la gestion de l'intersection des étapes 202 et 203. En effet, suite à l'extinction du clignotant à l'étape 202, l'information de gestion de l'intersection par la fonction pACC affichée sur l'IHM 106 peut être maintenue un temps prédéfini, compris entre une ou deux secondes par exemple, avant d'être effacée.

Suite à l'étape 205, l'ECU 101 peut déterminer à une étape 206 si l'intersection a été franchie par le véhicule 100 ou non. L'étape 205 peut être mise en œuvre par l'ECU 101 sur la base des données de capteurs et/ou de la superposition de données cartographiques et de données de géolocalisation du véhicule 100.

Si l'ECU 101 détermine à l'étape 206 que l'intersection n'a pas été franchie, l'inhibition de la gestion de l'intersection par la fonction pACC est maintenue à l'étape 205.

Si l'ECU 101 détermine à l'étape 206 que l'intersection a été franchie, le procédé retourne à l'étape 200, jusqu'à détection d'une nouvelle intersection et jusqu'à une nouvelle activation du clignotant.

Les figures 3a à 3c présentent trois situations de conduite identifiées par le module de contrôle selon l'invention, comme une approche d'une intersection par le véhicule.

La figure 3a présente une première situation de conduite correspondant à un premier type d'intersection.

Le premier type d'intersection correspond à une intersection standard dans laquelle le véhicule 100 circule sur une route courante 301.1, qui croise une autre route 301.2. L'autre route 301.2 peut se poursuivre de part et d'autre de la route courante 301.1, ou peut ne rejoindre la route courante 301.1 que par un côté, à droite ou à gauche par rapport au sens de circulation du véhicule 100. Sur la figure 3a, l'autre route 301.2 ne rejoint la route courante 301.1 que par la droite. Le véhicule 100 peut alors prendre la direction 302 à droite, et le conducteur peut l'indiquer selon l'invention en activant les clignotants droits du véhicule 100.

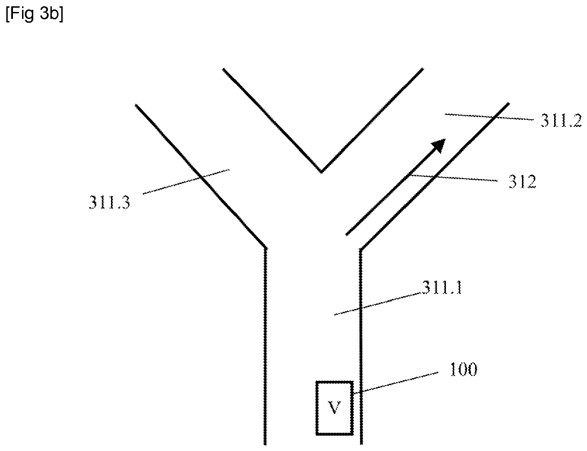

La figure 3b présente une deuxième situation de conduite correspondant à un deuxième type d'intersection.

Le deuxième type d'intersection correspond à une intersection en Y dans laquelle une route courante 311.1 sur laquelle circule le véhicule 100 se sépare en deux routes, à savoir une route à droite 311.2 et une route à gauche 311.3.

Dans l'exemple de la figure 3b, le conducteur du véhicule 100 peut indiquer son intention de prendre la route à droite 311.2, c'est-à-dire la direction 312, en activant les clignotants droits du véhicule 100.

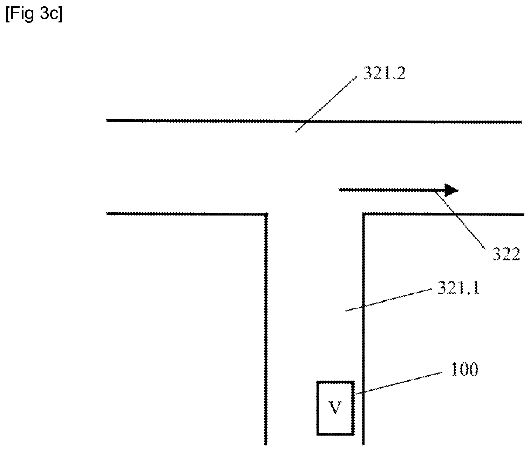

La figure 3c présente une troisième situation de conduite correspondant à un troisième type d'intersection.

Le troisième type d'intersection correspond à une intersection en T, dans laquelle la route courante 321.1 rejoint une autre route 321.2, et le véhicule 100 peut prendre la direction 322 à droite comme indiqué sur la figure 3c, à titre illustratif. Le conducteur du véhicule 100 peut indiquer son intention de prendre la direction 322 en activant les clignotants droits du véhicule 100.

Les trois types d'intersection peuvent être différenciés par l'ECU, et la gestion de l'intersection par la fonction pACC peut comprendre la diminution de la vitesse courante à une vitesse cible qui dépend du type d'intersection identifiée. Par exemple, la vitesse cible peut être plus basse pour les premier et troisième types que pour le deuxième type.

La figure 4 présente la structure d'un module de contrôle 400 selon un mode de réalisation de l'invention.

Comme indiqué précédemment, le dispositif 400 peut être le module ADAS 104 ou l'ECU 101, ou peut être intégré dans le module ADAS 104 ou dans l'ECU 101 précédemment décrits.

Le module de contrôle 400 comprend un processeur 401 configuré pour communiquer de manière unidirectionnelle ou bidirectionnelle, via un ou des bus ou via une connexion filaire directe, avec une mémoire 402 telle qu'une mémoire de type « *Random Access Memory* », RAM, ou une mémoire de type « *Read Only Memory* », ROM, ou tout autre type de mémoire (Flash, EEPROM, etc). En variante, la mémoire 402 comprend plusieurs mémoires des types précités.

La mémoire 402 comprend au moins une mémoire non-volatile dans laquelle sont stockés, de manière temporaire ou permanente, les données utilisées et/ou issues de la mise en œuvre des étapes du procédé selon l'invention décrit à la figure 2.

En particulier, la mémoire 402 peut être apte à stocker un ou plusieurs critères vérifiés à l'étape 204, notamment la durée seuil décrite précédemment, la distance seuil en-deça de laquelle il est déterminé que le véhicule est en approche d'une intersection, et la distance minimale nécessaire pour que la fonction d'assistance à la conduite puisse assurer la gestion de l'intersection.

On entend la gestion de l'intersection comme la gestion de la vitesse du véhicule à l'approche et pendant l'intersection.

La mémoire 402 peut en outre stocker temporairement les données de capteurs, les données de géolocalisation du véhicule et/ou des données cartographiques.

Le processeur 401 est apte à exécuter des instructions, stockées dans la mémoire 402, pour la mise en œuvre des étapes du procédé selon l'invention, décrit en référence à la figure 2. De manière alternative, le processeur 401 peut être remplacé par un microcontrôleur conçu et configuré pour réaliser les étapes du procédé selon l'invention, décrit en référence à la figure 2.

Le module de contrôle 400 comprend une première interface 403 apte à recevoir des signaux d'activation/extinction de clignotant issus de l'interface d'activation de clignotant 107, permettant de mettre en œuvre les étapes 200, 202 et 204 précédemment décrites.

Le module de contrôle 400 peut comprendre une deuxième interface 404, apte recevoir des données de capteurs, des données de géolocalisation du véhicule et/ou des données cartographiques. Plusieurs deuxièmes interfaces 404 peuvent ainsi être prévues, chaque deuxième interface 404 étant dédiée à la réception depuis une source de données distinctes, parmi l'ensemble 103, l'interface 105, le module GPS 102 ou la mémoire stockant des données cartographiques localement dans le véhicule 100.

Le module de contrôle 400 comprend en outre une troisième interface 405 apte à communiquer avec la fonction pACC du module ADAS 104, afin de l'activer, de la désactiver ou de la maintenir inhibée lors du franchissement d'une intersection. Dans le cas où le module de contrôle 400 est implémenté dans le module ADAS 104, une telle troisième interface 405 est optionnelle.

La présente invention ne se limite pas aux formes de réalisation décrites ci-avant à titre d'exemples ; elle s'étend à d'autres variantes, conformément aux revendications annexées.

## Revendications

1. Procédé de contrôle d'une fonction d'assistance à la conduite longitudinale d'un véhicule (100), le procédé comprenant les étapes suivantes :
- sur détection (200) d'une approche d'une intersection par le véhicule et d'une activation d'un clignotant du véhicule, indication (201) au conducteur d'une gestion de l'intersection par la fonction d'assistance à la conduite longitudinale ;
- sur détection (202) d'une extinction du clignotant, annulation (203) de la gestion de l'intersection par la fonction d'assistance à la conduite longitudinale ;
**caractérisé en ce que** le procédé comprend en outre l'étape suivante :
- suite à la détection (204) d'une nouvelle activation du clignotant du véhicule alors que l'intersection n'est pas franchie, inhibition (205) de la gestion de l'intersection par la fonction d'assistance à la conduite longitudinale jusqu'à une détection de franchissement de ladite intersection.

2. Procédé selon la revendication 1, dans lequel l'indication (201) de gestion de l'intersection par la fonction d'assistance à la conduite longitudinale comprend la transmission à une interface homme machine (106) du véhicule d'au moins une information de gestion de l'intersection par la fonction d'assistance à la conduite longitudinale, pour affichage de ladite au moins une information sur l'interface homme machine.

3. Procédé selon la revendication 2, dans lequel l'au moins une information affichée comprend un symbole d'intersection, une distance entre le véhicule et l'intersection, une vitesse courante et/ou une vitesse du véhicule après ralentissement par la fonction d'assistance à la conduite longitudinale.

4. Procédé selon l'une des revendications 1 à 3, dans lequel la fonction d'assistance à la conduite longitudinale est inhibée (205) si une durée entre l'extinction (202) du clignotant et la nouvelle activation (204) du clignotant est inférieure à une durée seuil.

5. Procédé selon la revendication 4 et selon l'une des revendications 2 et 3, dans lequel la durée seuil est une durée prédéfinie de maintien de l'information de gestion sur l'interface homme machine (106) après annulation (203) de la gestion de l'intersection par la fonction d'assistance à la conduite longitudinale.

6. Procédé selon l'une des revendications précédentes, dans lequel la fonction d'assistance à la conduite longitudinale est mise en œuvre, suite à l'inhibition de la gestion de l'intersection, en fonction :
- d'une vitesse et d'une position d'un autre véhicule en avant du véhicule ;
- d'une consigne indiquant une vitesse de croisière ; et/ou
- d'au moins un élément d'infrastructure routière autre que l'intersection.

7. Procédé selon l'une des revendications précédentes, dans lequel l'intersection détectée est une intersection dans laquelle une route courante (301.1 ; 311.1 ; 321.1) sur laquelle circule le véhicule :
- croise une autre route (301.2) à droite ou à gauche de la route courante ;
- se sépare en deux routes (311.2 ; 311.3) ; ou
- rejoint une autre route (321.2).

8. Programme informatique comportant des instructions pour la mise en œuvre du procédé selon l'une des revendications précédentes, lorsque ces instructions sont exécutées par un processeur (401).

9. Module de contrôle (400) apte à contrôler au moins une fonction d'assistance à la conduite longitudinale d'un véhicule mise en œuvre par un module d'assistance à la conduite (104), le module de contrôle comprenant un processeur (401) configuré pour :
- sur détection d'une approche d'une intersection par le véhicule, et sur détection d'activation d'un clignotant du véhicule, indiquer au conducteur une gestion de l'intersection par la fonction d'assistance à la conduite longitudinale ;
- sur détection d'une extinction du clignotant, annuler la gestion de l'intersection par la fonction d'assistance à la conduite longitudinale ;
**caractérisé en ce que** le processeur est en outre configuré pour:
- suite à la détection d'une nouvelle activation du clignotant du véhicule alors que l'intersection n'est pas franchie, inhiber la gestion de l'intersection par la fonction d'assistance à la conduite longitudinale jusqu'à une détection de franchissement de ladite intersection.

10. Véhicule (100) comprenant un module de contrôle (400) selon la revendication 9.

## Patentansprüche

1. Verfahren zum Überwachen einer Längsfahrunterstützungsfunktion eines Fahrzeugs (100), wobei das Verfahren die folgenden Schritte umfasst:
- Erfassen (200) einer Annäherung an eine Kreuzung durch das Fahrzeug und einer Aktivierung eines Blinkers des Fahrzeugs, Anzeigen (201) einer Steuerung der Kreuzung durch die Längsfahrunterstützungsfunktion für den Fahrer;
- Erfassen (202) einer Blinkerstörung, Aufheben (203) der Steuerung der Kreuzung durch die Längsfahrunterstützungsfunktion Längsleitung, **dadurch gekennzeichnet, dass** das Verfahren ferner den folgenden Schritt umfasst:
- nach der Detektion (204) einer erneuten Aktivierung des Blinkers des Fahrzeugs, während die Kreuzung nicht überschritten wird, Unterbindung (205) der Steuerung der Kreuzung durch die Funktion zur Unterstützung der Längsleitung bis zur Detektion der Überquerung der Kreuzung.

2. Verfahren nach Anspruch 1, wobei die Anzeige (201) zum Verwalten der Kreuzung durch die Longitudinal-Fahrhilfe-Funktion das Übertragen mindestens einer Information zum Verwalten der Kreuzung durch die Longitudinal-Fahrhilfe-Funktion an eine Mensch-Maschine-Schnittstelle (106) des Fahrzeugs umfasst, um die mindestens eine Information auf der Mensch-Maschine-Schnittstelle anzuzeigen.

3. Verfahren nach Anspruch 2, wobei die mindestens eine angezeigte Information ein Kreuzungssymbol, einen Abstand zwischen dem Fahrzeug und der Kreuzung, eine aktuelle Geschwindigkeit und/oder eine Geschwindigkeit des Fahrzeugs nach einer Verzögerung durch die Längsfahrunterstützungsfunktion umfasst.

4. Verfahren nach einem der Ansprüche 1 bis 3, bei dem die Längsfahrunterstützungsfunktion gesperrt (205) wird, wenn eine Zeitspanne zwischen dem Abschalten (202) des Blinkers und der erneuten Aktivierung (204) des Blinkers kleiner als eine Schwellenzeitspanne ist.

5. Verfahren nach Anspruch 4 und einem der Ansprüche 2 und 3, bei dem die Schwelldauer eine vordefinierte Dauer ist, während der die Verwaltungsinformationen auf der Mensch-Maschine-Schnittstelle (106) nach dem Aufheben (203) der Verwaltung der Kreuzung durch die Längsfahrhilfe-Funktion gehalten werden.

6. Verfahren nach einem der vorhergehenden Ansprüche, bei dem die Funktion zur Unterstützung der Längsführung nach dem Unterbinden der Verwaltung der Kreuzung in Abhängigkeit von Folgendem durchgeführt wird:
- einer Geschwindigkeit und einer Position eines anderen Fahrzeugs vor dem Fahrzeug;
- einem eine Reisegeschwindigkeit anzeigenden Sollwert; und/oder
- mindestens einem anderen Straßeninfrastrukturelement als der Kreuzung.

7. Verfahren nach einem der vorhergehenden Ansprüche, bei dem die erfasste Kreuzung eine Kreuzung ist, bei der eine aktuelle Straße (301.1; 311.1; 321.1), auf der das Fahrzeug fährt,
- eine andere Straße (301.2) rechts oder links von der aktuellen Straße kreuzt;
- sich in zwei Straßen (311.2; 311.3) aufteilt; oder
- sich einer anderen Straße (321.2) anschließt.

8. Computerprogramm mit Anweisungen zur Durchführung des Verfahrens nach einem der vorhergehenden Ansprüche, wenn diese Anweisungen von einem Prozessor (401) ausgeführt werden.

9. Steuermodul (400), das zur Steuerung mindestens einer Längsfahrunterstützungsfunktion eines Fahrzeugs geeignet ist, die durch ein Fahrunterstützungsmodul (104) implementiert ist, wobei das Steuermodul einen Prozessor (401) umfasst, der so konfiguriert ist:
- auf Erkennen einer Annäherung an eine Kreuzung durch das Fahrzeug und auf Erkennen der Aktivierung eines Blinkers des Fahrzeugs, dem Fahrer eine Steuerung der Kreuzung durch die Längsfahrunterstützungsfunktion anzuzeigen;
- auf Erkennen eines Ausschaltens des Blinkers, Aufhebung der Steuerung der Kreuzung durch die Funktion Längsfahrerassistenz;
- bei Erkennung einer erneuten Aktivierung des Blinkers des Fahrzeugs, wenn die Kreuzung nicht überschritten wird, die Steuerung der Kreuzung durch die Längsfahrerassistenzfunktion unterdrücken, bis eine Überschreitung der Kreuzung erkannt wird.

10. Fahrzeug (100) mit einem Steuermodul (400) nach Anspruch 9.

## Claims

1. Method for controlling a longitudinal driving assistance function of a vehicle (100), the method comprising the steps of:
- detecting (200) an approach to an intersection by the vehicle and an activation of a vehicle turn signal, indicating (201) to the driver an intersection management by the longitudinal driving assistance function;
- detecting (202) a turning off of the turn signal, cancellation (203) of the intersection management by the longitudinal driving assistance function, wherein the method further comprises the step of:
- following the detection (204) of a new activation of the turn signal of the vehicle when the intersection is not crossed, inhibiting (205) the intersection management function of assisting the longitudinal driving until a detection of crossing of said intersection.

2. Method according to claim 1, wherein the indication (201) for managing the intersection by the longitudinal driving assistance function comprises the transmission to a human-machine interface (106) of the vehicle of at least one item of information for managing the intersection by the longitudinal driving assistance function, for display of said at least one item of information on the human-machine interface.

3. Method as claimed in claim 2, wherein the at least one item of information displayed comprises an intersection symbol, a distance between the vehicle and the intersection, a current speed and/or a speed of the vehicle after slowing down by the longitudinal driving assistance function.

4. Method according to one of claims 1 to 3, in which the longitudinal driving assistance function is inhibited (205) if a period between the turning off (202) of the turn signal and the new activation (204) of the turn signal is less than a thresholds period.

5. Method according to claim 4 and one of claims 2 and 3, wherein the threshold period is a predefined period for maintaining the management information on the human-machine interface (106) after cancellation (203) of the management of the intersection by the longitudinal driving assistance function.

6. Method as claimed in claim 1, wherein the longitudinal driving assistance function is implemented, following the inhibition of the management of the intersection, as a function:
- of a speed and a position of another vehicle in front of the vehicle;
- of a setpoint indicating a cruising speed; and/or
- of at least one item of road infrastructure other than the intersection.

7. Method according to claim 1, wherein the detected intersection is an intersection in which a previous road (301.1; 311.1; 321.1) on which the vehicle is travelling:
- intersects another road (301.2) to the right or left of the current road;
- separates into two roads (311.2; 311.3); or
- joins another road (321.2).

8. Computer plan comprising instructions for implementing the method according to one of the previous claims, when these instructions are executed by a processor (401).

9. Control module (400) for controlling at least one longitudinal driving assistance function of a vehicle implemented by a driving assistance module (104), the control module comprising a processor (401) configured to:
- upon detection of an approach to an intersection by the vehicle, and upon detection of an activation of a flasher of the vehicle, indicate to the driver a management of the intersection by the longitudinal driving assistance function;
- upon detection of an extinction of the flasher, cancel the management of the intersection by the longitudinal driving assistance function;
- following the detection of a new activation of the flasher of the vehicle when the intersection is not crossed, inhibit the management of the intersection by the longitudinal driving assistance function until a detection of a crossing of said intersection.

10. Vehicle (100) comprising a control module (400) according to claim 9.
